# EUROPÄISCHE PATENTSCHRIFT

(11) **EP 1 558 391 B1**
(45) Veröffentlichungstag und Bekanntmachung des Hinweises auf die Patenterteilung: **29.03.2006**
(21) Anmeldenummer: 03778302.4
(22) Anmeldetag: 05.11.2003
(51) Int. Cl.: B01L 3/00, G01N 1/42, A01N 1/02

(54) **TIEFTEMPERATURSPEICHERUNG VON SUSPENSIONSPROBEN IN HÄNGENDEN PROBENKAMMERN**
LOW-TEMPERATURE STORAGE OF SUSPENSION SAMPLES IN SUSPENDED SAMPLE CHAMBERS
STOCKAGE A BASSE TEMPERATURE D'ECHANTILLONS EN SUSPENSION DANS DES CHAMBRES D'ECHANTILLONS SUSPENDUES

(30) Priorität: 06.11.2002 DE 10251668
(43) Veröffentlichungstag der Anmeldung: 03.08.2005
(73) Patentinhaber: Fraunhofer-Gesellschaft zur Förderung der angewandten Forschung e.V., 80686 München (DE)
(72) Erfinder: FUHR, Günter, 13187 Berlin (DE); ZIMMERMANN, Heiko, 66113 Saarbrücken (DE)
(74) Vertreter: Hertz, Oliver
(86) Internationale Anmeldenummer: PCT/EP2003/012355
(87) Internationale Veröffentlichungsnummer: WO 2004/040974

(56) Entgegenhaltungen:
- US-A- 5 390 553
- US-A- 5 863 715
- US-B1- 6 273 298

## Beschreibung

Die Erfindung betrifft Vorrichtungen zur Tieftemperaturspeicherung (insbesondere Kryospeicherung, Kryokonservierung) von Suspensionsproben, insbesondere eine Kryospeichervorrichtung für suspendierte biologische Zellen, Zellgruppen oder Zellbestandteile, mit den Merkmalen des Oberbegriffs von Anspruch 1 und Verfahren zur Tieftemperaturspeicherung.

Die Kryospeicherung biologischer Proben besitzt zahlreiche Anwendungen, die auf eine andauernde Lagerung der Proben unter Erhaltung von deren Vitalitätszustand gerichtet sind. Die zur Kryospeicherung verwendeten Vorrichtungen sind an die jeweiligen Proben und die Anforderungen bei der Probenhandhabung angepasst. Es können beispielsweise in der Transplantationsmedizin Organe oder Organteile bei tiefen Temperaturen gelagert werden. In der Transfusionsmedizin werden Blutspenden im tiefgefrorenen Zustand in Blutbanken gelagert.

Bei den herkömmlichen Anwendungen der Kryospeicherung geht es oft darum, möglichst große Probenvolumen auf möglichst engem Raum anzuordnen. Beispielsweise werden Blutspenden in Blutbeuteln oder Blutschläuchen aufbewahrt, die sich in der Blutbank dicht packen lassen. Die Blutbeutel sind mit einer Markierung (z. B. Strichcode) versehen, um eine gezielte und fehlerfreie Entnahme aus der Blutbank zu ermöglichen. Diese herkömmliche Kryospeicherung ist auf die Anwendung mit großen Proben (ml- bis 1-Bereich) beschränkt. In der Zellbiologie und in der molekularen Biotechnologie besteht jedoch die Aufgabe, kleinste biologische Proben (Einzelzellen, Zellgruppen oder Zellbestandteile) im tiefgefrorenen Zustand zu speichern und ggf. zu bearbeiten.

So wird beispielsweise in EP 804 073 die Kryobearbeitung von einzelnen Zellen beschrieben. Zellen werden auf einem Substrat im tiefgekühlten Zustand fixiert, gelagert und ggf. bearbeitet. Diese Technik besitzt den Nachteil, dass die Lagerung der auf Substraten fixierten Zellen relativ platzaufwendig sein kann, so dass der Aufbau einer Kryo-Zellbank erschwert ist. Des weiteren müssen zur Vermeidung von Kontaminationen kryofixierter Zellen die mit den Proben beschickten Substrate mit einer Schutzschicht versehen werden. Die Handhabung der derart gespeicherten Proben ist dadurch erschwert.

In DE 199 21 236 ist beschrieben, tropfenförmige Suspensionsproben zur Kryokonservierung auf strukturierten Substraten abzulegen, mit denen die Handhabbarkeit der gefrorenen Proben erleichtert wird. Als Träger der Proben besitzen die Substrate Probenaufnahmen in Form von Vertiefungen, deren Größe an das Tropfenvolumen angepasst ist. Die strukturierten Substrate können mit matrixförmig angeordneten Probenaufnahmen ausgestattet s.ein, wie sie von Mikro- oder Nanotiterplatten bekannt sind. Diese Kryosubstrate besitzen Nachteile in Bezug auf die Probenbeschickung und die Probenentnahme. Zur Probenbeschickung müssen alle Probenaufnahmen mit einer Dispensiervorrichtung befüllt werden. Dies kann bei Verwendung von Einzeldispensern sehr zeitaufwendig sein. Wenn eine Vielzahl parallel arbeitender Dispenser verwendet wird, so muss deren geometrische Anordnung an das Kryosubstrat angepasst sein. Zur Probenentnahme muss der in einer Probenaufnahme gespeicherte Tropfen vollständig aufgetaut werden, auch wenn nur ein Teil des Tropfens benötigt wird.

In US 42 62 494 wird eine Kryospeichervorrichtung mit mehreren kapillarförmigen Probenkammern beschrieben, die in einem transportablen Kühlcontainer angeordnet sind. Die Probenkammern sind von einer Wand des Kühlcontainers abstehend mit Abstand voneinander angeordnet. Diese Kryospeichervorrichtung ist speziell für den Transport von Kryoproben optimiert. Sie besitzt Nachteile in Bezug auf die Beschickung der starr gebildeten Probenkammern und die langfristige Lagerung unter Kryobedingungen.

Aus WO 02/46719 ist eine Kryospeichervorrichtung mit mindestens einer schlauch- oder kissenförmigen Probenkammer bekannt, die an einem Datenspeicher befestigt ist. Die Befestigung erfolgt direkt oder mit einem Halterahmen auf einer Verkapselung des Datenspeichers. Nachteilig an dieser Technik kann sein, dass zur Beschickung der Probenkammer ggf. ein Hilfsgerät erforderlich ist. Außerdem ist die Größe und damit die Aufnahmefähigkeit der Probenkammer durch die Dimensionierung des Datenspeichers beschränkt. Kapillarförmige Probenkammern für die Kryospeicherung werden auch in WO 99/20104 beschrieben. Die Probenkammern sind in einen Kühlkörper eingebettet, wobei sich die gleichen Nachteile wie bei der Technik gemäß WO 02/46719 ergeben.

Die Aufgabe der Erfindung ist es, eine verbesserte Kryospeichervorrichtung bereitzustellen, mit der die Nachteile herkömmlicher Kryospeichervorrichtungen überwunden werden und die insbesondere eine vereinfachte Beschickung mit einer Vielzahl suspendierter Zellen, Zellgruppen oder Zellbestandteile innerhalb kurzer Zeiten und eine selektive, teilweise Entnahme von Probenbestandteilen ermöglicht. Die Kryospeichervorrichtung soll insbesondere auch die Aufzeichnung und das Lesen von Daten ermöglichen, die zu den jeweils gespeicherten Proben gehören. Die Aufgabe der Erfindung ist es auch, ein verbessertes Verfahren zur Kryospeicherung anzugeben.

Diese Aufgaben werden durch eine Vorrichtung und ein Verfahren mit den Merkmalen gemäß den Patentansprüchen 1 oder 17 gelöst. Vorteilhafte Ausführungsformen und Anwendungen der Erfindung ergeben sich aus den abhängigen Ansprüchen.

Die Grundidee der Erfindung ist es, eine gattungsgemäße Kryospeichervorrichtung mit mindestens einer Datenspeichereinrichtung und mindestens einer langgestreckten Probenkammer dahingehend weiterzuentwickeln, die mindestens eine Probenkammer flexibel und beweglich hängend an der mindestens einen Datenspeichereinrichtung angebracht ist. Durch diese Maßnahme werden eine Reihe von Vorteilen erzielt, die sich bei der Probenbeschickung, der Überwachung des kryogespeicherten Zustands und der Entnahme von Proben positiv auswirken. So können erfindungsgemäß verwendete Probenkammern schnell befüllt oder geleert werden. Die Probenkammern sind miniaturisierbar und flexibel an die Einsatzbedingungen anzupassen. Die Einlassenden einer Vielzahl von gleichzeitig verwendeten Probenkammern können problemlos an beliebige Anordnungen von Probenreservoiren angepasst werden, aus denen Proben entnommen werden sollen. Die Probenkammern ermöglichen einen Abschluss der Proben gegenüber der Umgebung. Eine Kontamination aus der umgebenden Gas- oder Flüssigkeitsphase (z. B. aus einem Kühlmedium) ist ausgeschlossen. Aus einer erfindungsgemäß vorgesehenen Probenkammer können Proben durch Auftauen der gesamten Probenkammer oder Teilproben durch mechanisches Abtrennen entnommen werden, ohne dass die gesamte Probenkammer aufgetaut wird. Das mechanische Abtrennen kann sogar unter Wirkung einer lokalen Erwärmung erfolgen, ohne dass ein Verlust der in der übrigen Probenkammer vorgesehenen Probe entsteht.

An der Datenspeichereinrichtung ist vorzugsweise eine Vielzahl von lang gestreckten Probenkammern, insbesondere eine Vielzahl von Schläuchen oder Kapillaren angeordnet, die im beschickten Zustand hängend in ein gasförmiges oder flüssiges Kühlmedium getaucht werden können. Die lang gestreckten Probenkammern können mit einer Länge gebildet werden, die frei nach den konkreten Bedingungen (insbesondere Probenmenge, Größe des Kryobehälters usw.) gewählt ist. Im Unterschied zu herkömmlichen Techniken können größere Probenmengen konserviert werden.

Gemäß einer bevorzugten Ausführungsform der Erfindung besitzt die Probenkammer eine Querschnittsdimension, insbesondere der Ein- und Auslassenden, die wesentlich kleiner als die Länge der Probenkammer ist, so dass sich die Form eines Hohlzylinders, Hohlkonus, Rohres, Schlauches, einer Hohlnadel oder einer Kapillare ergibt. Diese Ausführungsform kann Vorteile in Bezug auf die Beschickung der Probenkammer besitzen. Der Flüssigkeitstransport in der Probenkammer kann unter der Wirkung von Kapillarkräften oder eines äußeren Über- oder Unterdruckes erfolgen.

Die mindestens eine Probenkammer besteht vorzugsweise an sich aus einem flexiblen, biegsamen Material. Dies ermöglicht erstens eine Beschickung in einem Platz sparenden Zustand. Die Probenkammer können beispielsweise im Labor oder einer Arztpraxis selbst bei großer Länge im aufgewickelten Zustand beschickt werden. Die Biegsamkeit des Materials ermöglicht ferner die erfindungsgemäße flexible und beweglich hängende Positionierung an der mindestens einen Datenspeichereinrichtung durch eine direkte Befestigung der Probenkammer an der Datenspeichereinrichtung. Dies besitzt den Vorteil eines kompakten Aufbaus. Alternativ kann eine Befestigungseinrichtung vorgesehen ist, mit der die mindestens eine Probenkammer flexibel und beweglich hängend an der Datenspeichereinrichtung befestigt ist. Dadurch kann die mechanische Abtrennung einzelner Probenkammern von der Kryospeichervorrichtung insbesondere im gekühlten Zustand vereinfacht werden. Die Befestigungseinrichtung umfasst beispielsweise einzeln oder als Bündel angeordnete flexible Streifen oder Bänder, an deren einen Ende jeweils eine Probenkammer und deren anderes Ende an der Datenspeichereinrichtung befestigt ist.

Gemäß einer weiteren bevorzugten Ausführungsform der Erfindung kann die Datenspeichereinrichtung mindestens einen Datenspeicher (z. B. einen Speicherchip) mit einem Gehäuse umfasst, mit dem die mindestens eine Probenkammer, ggf. über die Befestigungseinrichtung verbunden ist. Das Gehäuse ermöglicht vorteilhafterweise die Verwendung verschiedener Datenspeicher, so dass die Flexibilität bei der Anwendung der Kryospeichervorrichtung verbessert wird.

Gemäß einer weiteren vorteilhaften Ausführungsform der Erfindung kann die Datenspeichereinrichtung eine Vielzahl von Datenspeichern aufweisen, die entlang der Länge der mindestens einen Probenkammer befestigt sind. Es kann eine hängende Kette von Datenspeichern an den Probenkammern gebildet werden. Vorteile können sich.insbesondere für eine abschnittsweise Probenentnahme jeweils im Verbund mit einem Datenspeicher ergeben.

Erfindungsgemäß kann der Querschnitt der mindestens einen Probenkammer entlang von deren Länge variieren, so dass mindestens eine Teilkammer mit einer Querschnittsfläche gebildet wird, die größer als die Querschnittsdimensionen der Ein- und Auslassöffnungen ist. Die Teilkammer(n) bilden Taschen, die vorteilhafterweise eine vergrößerte Probenmenge aufnehmen und eine abschnittsweise Probenentnahme vereinfachen.

Wenn die Probenkammern aus einem flexiblen Material bestehen, können sie an ihren Außenwänden miteinander verbunden sein, so dass ein integraler, flexibler Probenkammerblock gebildet wird. Damit kann die Speicherdichte bei der Kryokonservierung erhöht werden.

Die Funktionalität der erfindungsgemäßen Kryospeichervorrichtungkann ferner erhöht werden, wenn eine Markierungseinrichtung, die eine Markierungsschicht auf der Datenspeichereinrichtung und/oder Markierungselemente an der.Probenaufnahmeeinrichtung umfasst, und/oder mindestens ein Sensor, insbesondere ein Temperatursensor, und/oder Kühlflächen an den Probenkammer vorgesehen sind.

Ein Gegenstand der Erfindung ist auch ein Verfahren zur Kryospeicherung von Suspensionsproben, bei dem diese unter der Wirkung von Kapillar- oder äußeren Druckkräften in mindestens eine langgestreckte Probenkammer aufgenommen und in dieser in einen kryokonservierten Zustand überführt werden. Die erfindungsgemäße Kryospeicherung erfolgt allgemein bei einer Temperatur unterhalb der Raumtemperatur, bei der eine vitalitätserhaltende, andauernde Lagerung der Proben möglich ist. Die gewählte Temperatur und die Dauer der Lagerung sind anwendungsabhängig gewählt. Besonders vorteilhaft ist die Erfindung bei Tieftemperaturlagerungen bei Temperaturen unterhalb von minus 100°Celsius und insbesondere bei der Temperatur von flüssigem Stickstoff, umsetzbar.

Weitere Vorteile und Einzelheiten der Erfindung werden aus der folgenden Beschreibung der beigefügten Zeichnungen ersichtlich. Es zeigen:
- Fign. 1 bis 4:: verschiedene Ausführungsformen erfindungsgemäßer Kryospeichervorrichtungen,
- Fig. 5:: schematische Querschnittsansichten verschiedener Ausführungsformen erfindungsgemäß verwendeter Probenkammern,
- Fign. 6 bis 8:: weitere Ausführungsformen erfindungsgemäßer Kryospeichervorrichtungen,
- Fign. 9 bis 11:: Illustrationen zur Handhabung erfindungsgemäßer Kryospeichervorrichtungen, und
- Fig. 12:: vergrößerte Teilansichten der Ein- oder Auslassenden von Probenkammern.

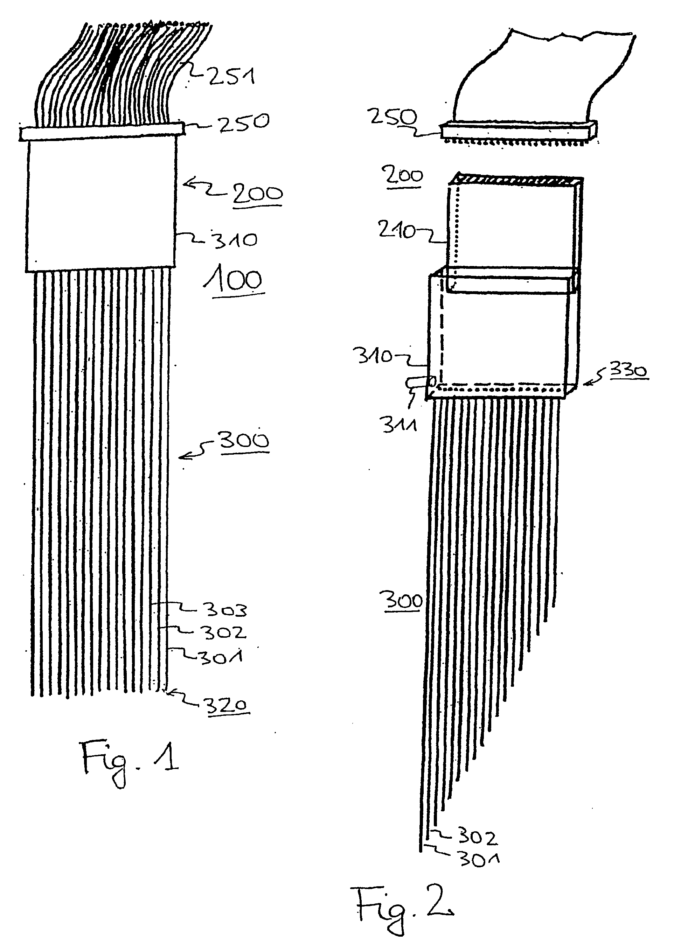

Fig. 1 zeigt eine erste Ausführungsform einer erfindungsgemäßen Kryospeichervorrichtung 100 in schematischer Seitenansicht. Die Kryospeichervorrichtung 100 umfasst eine Datenspeichereinrichtung 200 und eine Probenaufnahmeeinrichtung 300. Die Datenspeichereinrichtung 200 enthält mindestens einen Datenspeicher 210, der in einem Gehäuse 310 angeordnet ist. Der Datenspeicher 210 besitzt eine Schnittstelle zur zumindest zeitweiligen Aufnahme einer Steckverbindung 250 mit elektrischen Verbindüngsleitungen 251, über die der Datenspeicher 210 mit einer Steuereinrichtung (nicht dargestellt) verbunden werden kann.

Als Datenspeicher 210 ist ein an sich bekannter Speicherchip vorgesehen, in dem anwendungsabhängig beliebige Daten elektrisch, magnetisch oder optisch gespeichert sind. Es wird beispielsweise ein sogenannter Flash-Speicher verwendet.

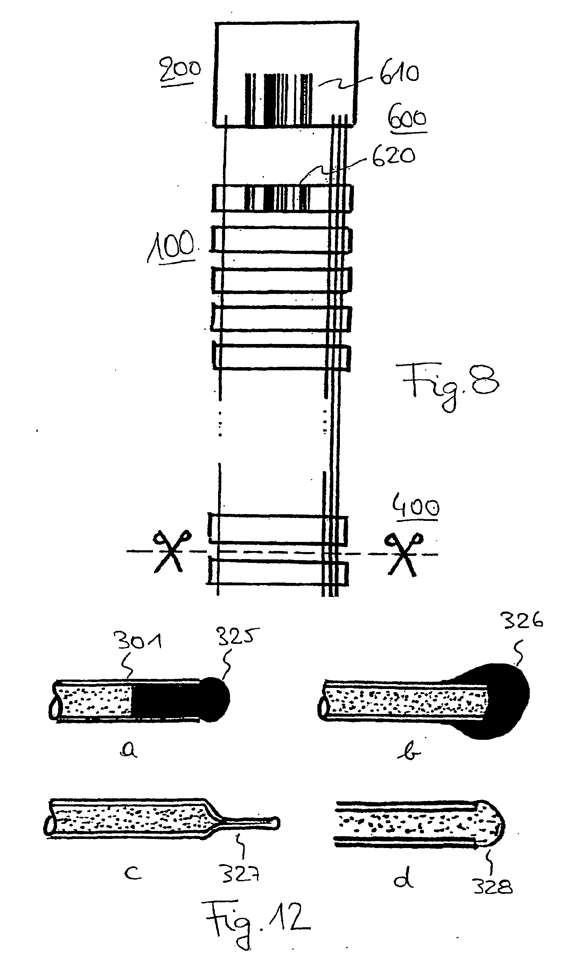

Mit der Datenspeichereinrichtung 200 ist die Probenaufnahmeeinrichtung 300 verbunden. Die Probenaufnahmeeinrichtung 300 umfasst eine Vielzahl von schlauchförmigen Probenkammern 301, 302, 303,..., die bei der dargestellten Ausführungsform direkt am Gehäuse des Datenspeichers 210 einzeln hängend befestigt sind. In Fig. 1 sind beispielhaft 17 Probenkammern gezeigt. Es wird betont, dass die Erfindung auch mit einer einzelnen, rohrförmigen Probenkammer oder einer anderen Anzahl (z. B. bis zu 100 oder mehr) umsetzbar ist. Die Probenkammern können ferner mit einer Befestigungseinrichtung an der Datenspeichereinrichtung 200 befestigt sein (siehe Fig. 7).

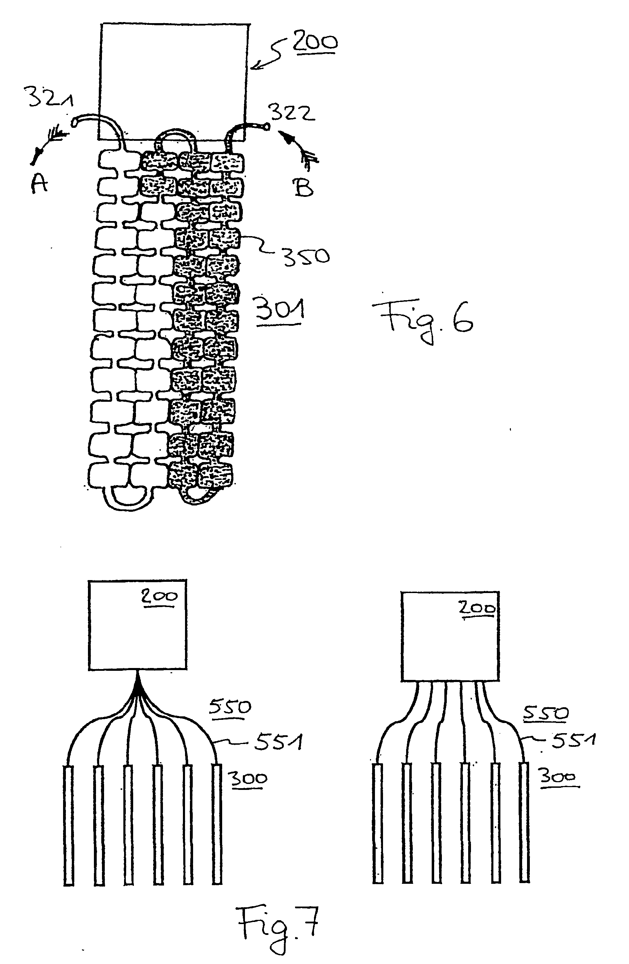

Die Probenkammern (z. B. 301) bestehen jeweils aus einem Schlauch oder einer flexiblen Kapillare mit einem Innendurchmesser, der wesentlich kleiner als die Länge der Probenkammer ist. Der Innendurchmesser liegt beispielsweise im Bereich von 5 µm bis 4 mm. Die Länge der Probenkammern ist beispielsweise im Bereich von 0.5 cm bis 10 dm gewählt. Der Quotient aus Querschnittsdurchmesser und Länge einer Probenkammer ist vorzugsweise kleiner als 1/10. Die Probenkammern können aus jedem geeigneten inerten Material, z. B. Kunststoff, Silikongummi, Glas oder Halbleitermaterial bestehen. Das Wandmaterial der Probenkammern kann je nach den gewünschten Anforderungen für die Kryospeicherung flüssigkeitsdicht oder permeabel ausgebildet sein. Es kann insbesondere ein ionendurchlässiges Material verwendet werden, wie es von Dialyse-Röhrchen bekannt ist. In das Wandmaterial der Probenkammern oder auf dessen Oberfläche können zusätzlich Sensoren (z. B. Temperatursensoren) vorgesehen sein. Die Probenkammern können mit einem entlang ihrer Länge konstanten Durchmesser gebildet sein, der dem Durchmesser der Einlass- und Auslassenden (oder Einlass- und Auslassöffnungen) der Probenkammer entspricht. Bei abgewandelten Ausführungsformen der Erfindung ist entlang der Länge der Probenkammern eine Variation des Innendurchmessers vorgesehen (siehe Fig. 6). Es kann auch eine Variation der Länge der Probenkammern, die zu einer Kryospeichervorrichtung gehören, vorgesehen sein, siehe Fig. 2). Die freien Enden der Probenkammern 301, 302, ... der Probenaufnahmeeinrichtung 300 gemäß Fig. 1 bilden die Einlassenden 320, über die vorzugsweise eine Beschickung der Probenkammern erfolgt. Mit den entgegengesetzten Enden, die anwendungsabhängig Auslassenden oder Druckausgleichsenden bilden, sind die Probenkammern an der Datenspeichereinrichtung 200, dem Gehäuse 310 oder einem Druckverteiler befestigt. Die Druckausgleichsenden können einzeln oder gemeinsam mit einem Unterdruck beaufschlagt werden, um Suspensionsproben in der unten erläuterten Weise in die Probenkammern zu übernehmen.

Ein besonderer Vorteil der Erfindung ergibt sich, wenn die verwendeten Probenkammern aus einem flexiblen Material bestehen. Die Probenkammern sind so dimensioniert, dass die Einlassenden 320 in beliebigen Anordnungen eingestellt werden können, um bei Raumtemperatur Suspensionsproben aus Behältnissen, Reservoiren o. dgl. zu entnehmen. Dies ist sowohl bei Probenkammern aus makroskopisch elastischen Materialien, wie z. B. Kunststoffen, Polymeren oder Metallen, als auch aus Materialien mit einer höheren Härte, wie z. B. Glas, Halbleiter, insbesondere Silizium, Kohlenstoff oder Keramik, möglich.

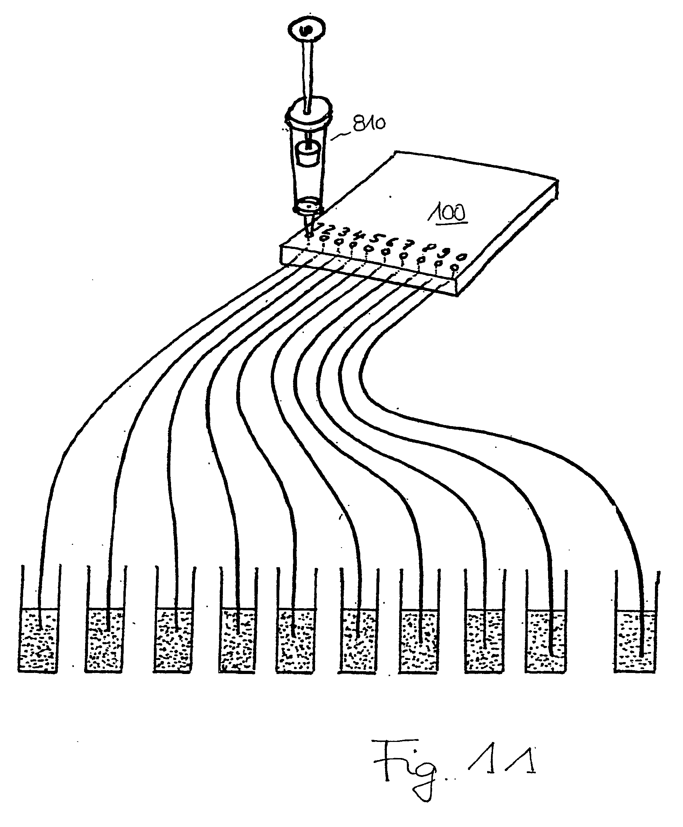

Die Verwendung einer erfindungsgemäßen Kryospeichervorrichtung, beispielsweise gemäß Fig. 1, erfolgt entsprechend den folgenden Schritten (siehe auch Fig. 11). Erstens erfolgt eine Beschickung der Probenaufnahmeeinrichtung 300. Suspensionsproben werden durch Ausübung eines Unterdruckes oder unter der Wirkung von Kapillarkräften aus Vorratsbehältern, z. B. den Wells einer Titerplatte, in die Probenkammern aufgenommen. Daten zur Charakterisierung der aufgenommenen Suspensionsproben werden in die Datenspeichereinrichtung 200 eingeschrieben. Diese Daten umfassen beispielsweise bei medizinischen Anwendungen Identifizierungsdaten zur Bestimmung des Spenders und der Arten der suspendierten Zellen, weitere Merkmale des Spenders, wie z. B. die Blutgruppe, ggf. relevante Literaturdaten zu den suspendierten Zelltypen und ggf. bereits vorliegende Messdaten und/oder Bilddaten. Die Bilddaten umfassen beispielsweise licht- oder elektronenmikroskopische Abbildungen von suspendierten Zellen, die der spenderspezifischen Charakterisierung der Zellen und späteren Vergleichen dienen. Die gespeicherten Daten werden während der Kryospeicherung abgerufen und/oder ergänzt. Schließlich erfolgt der Konservierungsschritt. Die Kryospeichervorrichtung wird mindestens mit der Probenaufnahmeeinrichtung 300, vorzugsweise jedoch sowohl mit der Probenaufnahmeeinrichtung 300 als auch mit der Datenspeichereinrichtung 200 in eine Umgebung mit reduzierter Temperatur überführt. Diese Umgebung ist beispielsweise in einem Kryobehälter mit flüssigem Stickstoff oder mit gasförmigem Stickstoff bei T = - 120°C gegeben. Weitere Einzelheiten der Kryospeicherung werden unten erläutert.

Bei der in Fig. 2 illustrierten Ausführungsform der erfindungsgemäßen Kryospeichervorrichtung wird die Probenaufnahmeeinrichtung 300 durch eine Reihe von rohrförmigen Probenkammern 301, 302, ... gebildet, deren Längen verschieden sind. Es ist beispielsweise der gezeigte Längengradient vorgesehen. Mit dieser Gestaltung ergeben sich Vorteile bei der Beschickung aus Suspensionsbehältern, in denen in Folge eines vorangegangenen Zentrifugationsschrittes ein Zelltypen- oder insbesondere Zellgrößen-Gradient gegeben ist. Mit dem Längengradienten der Probenkammern werden in die einzelnen Probenkammern verschiedene Zelltypen aufgenommen. Der Längengradient liefert automatisch eine Größensortierung.

Fig. 2 zeigt auch weitere Einzelheiten des Gehäuses 310, das ein Ansatzstück der Probenaufnahmeeinrichtung 300 bildet. Das Gehäuse 310 dient einerseits der Aufnahme des Speicherchips 210 und andererseits der Bereitstellung eines Arbeitsvolumens, über das ein Unterdruck auf die Druckausgleichsenden 330 der Probenkammern ausgeübt werden kann. Hierzu ist am Gehäuse 310 beispielsweise ein Stutzen 311 zur Ausbildung des Betriebsdruckes vorgesehen. Erfindungsgemäß ist nicht zwingend vorgesehen, dass das Gehäuse 310 und der Speicherchip 210 getrennte Bauteile bilden. Alternativ ist auch möglich, dass die Probenkammern und gegebenenfalls Einrichtungen zur Druckübertragung oder dgl. direkt am herstellungsbedingt gegebenen Gehäuse oder der Verkapselung des Speicherchips 210 vorgesehen oder befestigt sind.

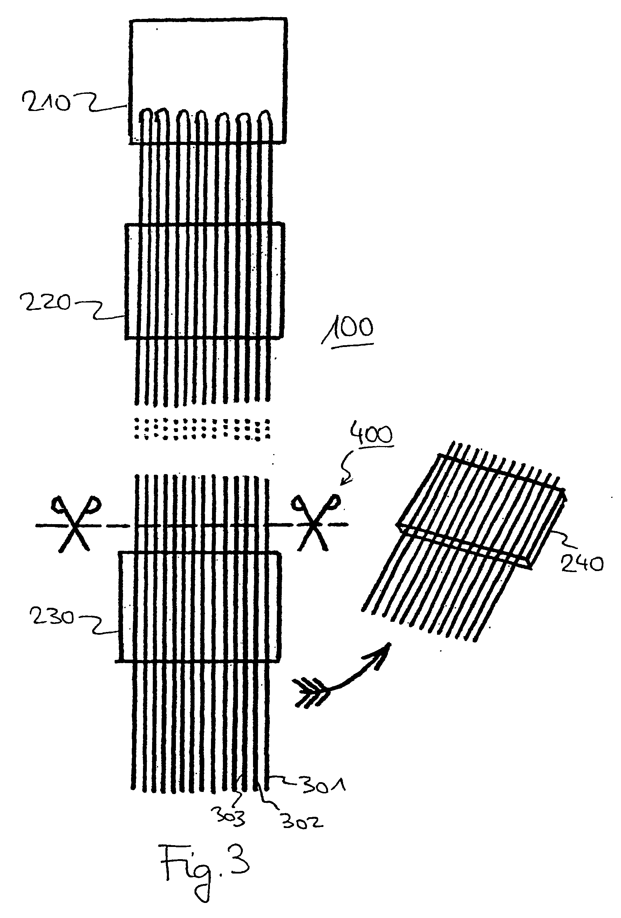

Die Datenspeichereinrichtung 200 einer erfindungsgemäßen Kryospeichervorrichtung 100 kann gemäß Fig. 3 auch mehrere Speicherchips oder Datenspeicher 210, 220, 230, 240, ... umfassen. Die Datenspeicher sind entlang der Länge der Probenkammern 301, 302, ... angeordnet. Es ist beispielsweise eine Fixierung der Probenkammern (z. B. Kleben, Eingießen oder dgl.) der Probenkammern am Verkapselungsmaterial der Datenspeicher vorgesehen. Der Vorteil dieser Gestaltung besteht darin, dass Teile der kryogespeicherten Proben gemeinsam mit Teilmengen der gespeicherten Daten entnommen werden können. Dies erfolgt beispielsweise mit einer schematisch illustrierten Trennvorrichtung 400, mit der die rohrförmigen Probenkammern entsprechend einer bestimmten Länge mit einem zugehörigen Datenspeicher (z. B. 240) abgetrennt werden. Die Trennvorrichtung basiert vorzugsweise auf einem mechanischem Trennvorgang (z. B. Schneiden, Stanzen oder dgl.), der ggf. mit einer thermischen Bearbeitung (z. B. lokales Erwärmen) kombiniert ist.

Fig. 3 illustriert auch die Möglichkeit einer Kombination von Probenkammerpaaren. Im Bereich des Datenspeichers 210 sind jeweils 2 benachbarte Probenkammern miteinander verbunden, so dass paarweise einzelne Probenkammern 303 gebildet werden. Zur Beschickung wird jeweils ein freies Ende (Auslassende 330) der Probenkammer 303 mit einem Unterdruck beaufschlagt, während das andere Ende (Einlassende 320) in ein Reservoir mit der Probensuspension ragt.

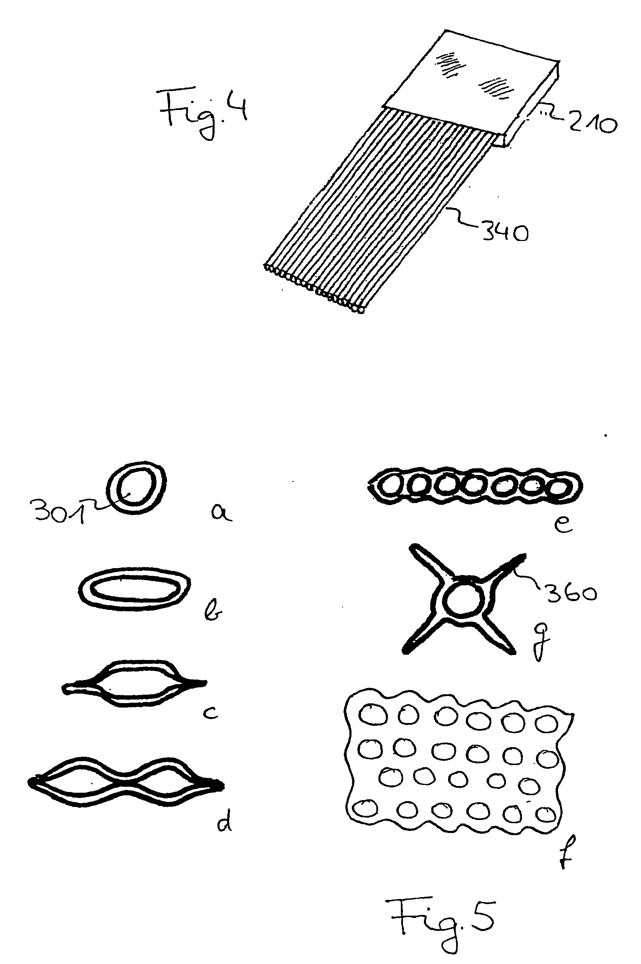

Die Probenkammern der Probenaufnahmeeinrichtung 300 können erfindungsgemäß als integraler Probenkammerblock 340 (siehe Fig. 4) gebildet sein, der mit der Datenspeichereinrichtung 200 verbunden ist. Gegenüber der in Fig. 1 dargestellten separaten oder freien Führung der Probenkammern besitzt der Probenkammerblock 340 mit den an ihren Außenwänden verbundenen Probenkammern den Vorteil einer erhöhten Stabilität sowohl bei Raumtemperatur als auch im tiefgekühlten Zustand. Die Probenkammern können wie bei der reihenweisen Anordnung von Leitungsverbindungen zu einem Bandkabel flächig angeordnet sein. Alternativ ist ein Probenkammerblock mit mehreren, übereinander angeordneten Reihen von Probenkammern verwendbar. Alternativ ist es ferner möglich, in mindestens einem ersten Teilbereich der Probenaufnahmeeinrichtung 300 die Probenkammern als integralen Block miteinander zu verbinden und in mindestens einem zweiten Bereich eine getrennte Anordnung, z. B. zur flexiblen Ausrichtung der Einlassenden, vorzusehen.

Eine erfindungsgemäß verwendete Probenkammer besitzt allgemein einen rohrförmigen Querschnitt. Dies bedeutet, dass die Längsdimension der Kammer wesentlich größer als die mittlere Querschnittsdimension der Probenkammer und insbesondere der Ein- und Auslassöffnungen ist. Dabei ist die innere Form der Probenkammer nicht auf eine bestimmte Geometrie beschränkt. Gemäß Fig. 5 kann die Probenkammer 301 beispielsweise einen kreisrunden (a) oder einen ovalen (b) Querschnitt besitzen. Falls die Probenkammer aus zwei zusammengehefteten Folienstreifen gebildet ist, kann sich die Querschnittsform gemäß den Teilbildern (c) oder (d) ergeben. Es können auch mehr Probenkammern als Reihe oder im Volumen nebeneinander angeordnet sein (e, f). Das Teilbild (e) entspricht beispielsweise der in Fig. 4 illustrierten Ausführungsform der Erfindung. Gemäß einer weiteren Ausführungsform der Erfindung (Fig. 5g) ist die Probenaufnahmeeinrichtung mit Kühlelementen 360 ausgestattet. Die Kühlelemente 360 sind beispielsweise als Ausbuchtungen oder Vorsprünge auf der Außenseite der Probenkammern geformt. Diese Gestaltung besitzt den besonderen Vorteil, dass der Abkühlprozess bei der Überführung in den Tieftemperaturzustand beschleunigt wird.

Erfindungsgemäß kann der Querschnitt der mindestens einen rohrförmigen Probenkammer 301 entlang ihrer Länge variabel sein, wie in Fig. 6 beispielhaft dargestellt ist. Die Gestaltung mit einem veränderlichen Querschnitt besitzt Vorteile in Bezug auf die Handhabbarkeit und Funktionalität der Probenkammern. Gemäß Fig. 6 werden Kammerabschnitte mit geringeren Querschnittsdimensionen. und Kammerabschnitte mit größeren Querschnittsdimensionen gebildet. Die Kammerabschnitte mit den größeren Querschnittsdimensionen werden auch als Teilkammern 350 bezeichnet. In Fig. 6 ist beispielhaft eine einzelne Probenkammer 301 mit einer Vielzahl von Teilkammern 350 dargestellt, die mäanderförmig ausgelegt an der Datenspeichereinrichtung 200 befestigt ist. Die Beschickung der Probenkammer 301 erfolgt, indem über das Auslassende 321 ein Unterdruck angelegt wird (Pfeil A), unter dessen Wirkung über das Einlassende 322 eine Suspensionsprobe (gepunktet gezeichnet) in die Probenkammer 301 gezogen wird (Pfeil B). Der Vorteil dieser Ausführungsform mit variablem Querschnitt der mindestens einen Probenkammer besteht in der vereinfachten Handhabung der erfindungsgemäßen Kyrospeichervorrichtung im Tieftemperaturzustand. Einzelne Teile der kyrokonservierten Suspensionsprobe können ohne Störung der restlichen Probe entfernt werden, indem die Teilkammern 340 mit einer geeigneten Trennvorrichtung mechanisch von der Probenaufnahmeeinrichtung 300 getrennt werden. Die Kammerabschnitte zwischen den Teilkammern 340 bilden dabei vorteilhafterweise Sollbruchstellen zur Teilprobenentnahme. Es ist mindestens eine Teilkammer 350 vorgesehen.

Eine erfindungsgemäße Kryospeichervorrichtung kann gemäß Fig. 7 mit einer Befestigungseinrichtung 550 ausgestattet sein, die der flexiblen, hängenden Anbringung der Probenaufnahmeeinrichtung 300 an der Datenspeichereinrichtung 200 dient. Die Bereitstellung einer gesonderten Befestigungseinrichtung besitzt Vorteile in Bezug auf die Probenentnahme insbesondere im gekühlten Zustand. Teilproben in Form einzelner Probenkammern 301 können durch Zerschneiden des entsprechenden Teils der Befestigungseinrichtung 550 ohne weiteres entnommen werden, ohne dass die jeweilige Probenkammer beeinflusst wird.

Die Befestigungseinrichtung 550 besteht aus einer Vielzahl von Streifen oder Bändern 551, an denen einerseits jeweils eine Probenkammer 301 angebracht ist und die andererseits an der Datenspeichereinrichtung 200 befestigt sind. Die Streifen 551 bestehen beispielsweise aus einem Kunststoffband, mindestens einer Kunststofffaser, einem Metalldraht oder einem Metallband. Vorteilhafterweise wird die erfindungsgemäß vorgesehene feste Verbindung zwischen der Probenaufnahmeeinrichtung 300 und der Datenspeichereinrichtung 200 durch die Befestigungseinrichtung verlängert. Die Befestigung der Streifen 551 kann bündelförmig (linkes Teilbiid) oder separat (rechtes Teilbild) an der Datenspeichereinrichtung 200), z. B. am Gehäuse eines Chips erfolgen.

Gemäss einer weiteren Ausführungsform der erfindungsgemäßen Kryospeichervorrichtung können die Datenspeichereinrichtung und/oder Probenaufnahmeeinrichtung mit einer Markierungseinrichtung ausgestattet sein. Die Markierungseinrichtung umfasst beispielsweise eine Markierungsschicht und/oder Markierungselemente, die vorzugsweise eine optisch detektierbare oder lesbare Information tragen. Die in Fig. 8 schematisch illustrierte Bereitstellung der Markierungseinrichtung besitzt den Vorteil, dass die Handhabung der Kryospeichervorrichtung insbesondere im Rahmen des Betriebs einer Kryobank vereinfacht wird. Auf der Grundlage der an der Markierungseinrichtung erfassten Informationen ist eine schnelle und sichere Identifizierung einer bestimmten Kryospeichervorrichtung aus einer Vielzahl von Vorrichtungen mit gleichem Aufbau möglich. Dies ist bei allen Abläufen von Vorteil, bei denen eine schnelle Handhabung oder Manipulierung der Kryospeichervorrichtung erwünscht ist, wie z. B. bei der Entnahme aus einem Kryomedium.

Fig. 8 zeigt als Teile der Markierungseinrichtung 600 eine Markierungsschicht 610 auf der Datenspeichereinrichtung 200 und Markierungselemente 620, die an der Probenaufnahmeeinrichtung 300 angebracht sind. Es ist mindestens ein Markierungselement vorgesehen, das an mindestens einer röhrförmigen Probenkammer angebracht ist. Bevorzugt wird die illustrierte Anordnung realisiert, bei der jeweils ein Markierungselement 620 an einer Vielzahl von Probenkammern (teilweise gezeigt) angebracht ist. Die auf der Markierungsschicht 610 und den Markierungselementen 620 angebrachten Markierungen werden z. B. durch einen Strichcode gebildet, der die Kryospeichervorrichtung 100 eindeutig identifiziert und gegebenenfalls weitere Informationen über deren Herstellung (z. B. erstes Einfrieren oder dg.) enthält. Die Markierung enthält auf allen Teilen der Markierungseinrichtung 600 mindestens eine identische Teilinformation (z. B. Identifizierung) und ggf. zusätzliche Informationen, wie z. B. die Position eines Markierungselements 620 entlang der Länge der Probenkammern 301.

Die Markierungsschicht 610 besteht beispielsweise aus einem Aufdruck auf einem Gehäuse der Datenspeichereinrichtung 200. Die Markierungselemente 620 sind beispielsweise Kunststoffstreifen, die an der mindestens einen Probenkammer befestigt sind. Die Probenkammern können auf der Oberfläche der Kunststoffstreifen angeformt oder aufgeklebt oder auch in die Körper der Kunststoffstreifen integriert sein. Die Markierung ist auf der jeweils noch freien Oberfläche der Markierungselemente 620 angebracht.

Wenn eine Vielzahl von Markierungselementen 620 vorgesehen sind, kann vorteilhafterweise eine Entnahme von Teilproben unter Beibehaltung der zugeordneten Markierungsinformation erfolgen. Mit der Trennvorrichtung 400 kann eine Abtrennung von Probenkammern im Verbund mit einem oder mehreren Markierungselementen 620 erfolgen.

Die Markierungselemente 620 können erfindungsgemäß als Teile der Stabilisierungseinrichtung 500 (siehe oben) vorgesehen sein. Die Markierungsinformation kann auf Teilen der Stabilisierungseinrichtung 500 angebracht werden.

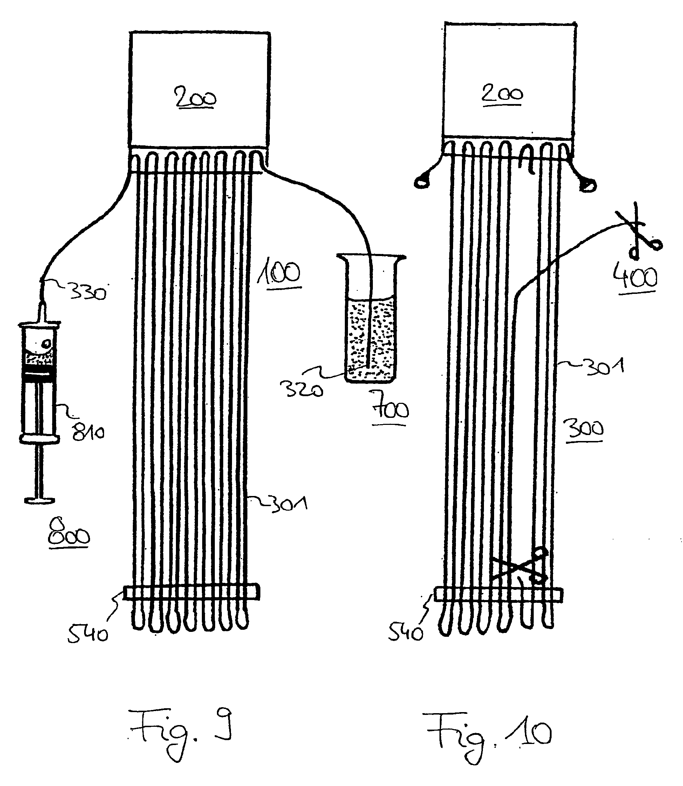

In Fig. 9 ist die Beschickung einer erfindungsgemäßen Kryospeichervorrichtung mit einer einzelnen, meanderförmig ausgelegten Probenkammer 301 illustriert. Es ist ein Probenreservoir 700 mit einem einzigen Kompartiment, z. B. in Form eines Becherglases, Zentrifugenbechers oder dgl., vorgesehen. Im Ergebnis vorangegangener Bearbeitungsschritte liegt die Suspensionsprobe mit einer oder mehreren Arten von Zellen, Zellgruppen und/oder Zellbestandteilen im Probenreservoir 700 vor. Die Probenkammer 301 ist mit ihrer Einlassöffnung 320 in das Probenreservoir 700 getaucht. Am entgegengesetzten Ende 330 ist eine Saugeinrichtung 800 vorgesehen, die beispielsweise durch eine Flüssigkeitspipette, Kolbeneinrichtung oder Spritzeneinrichtung 810 gebildet wird. Bei Betätigung der Saugeinrichtung 800 kann die Suspensionsprobe vom Probenreservoir 700 vorteilhafterweise blasenfrei in die Probenkammer 301 gesogen werden.

Am unteren Ende der meanderförmig ausgelegten Probenkammer 301 ist ein Stabilisierungssteg 540 dargestellt, der als Stabilisierungseinrichtung dient. Insbesondere beim Eintauchen der Probenaufnahmeeinrichtung 200 in ein Kühlmedium werden die Schlaufenenden der Probenkammer 301 zusammengehalten. Eine Behinderung oder störende Überlagerung mit anderen Probenkammern oder Probenkammerteilen von ggf. im Kühlmedium vorhandenen weiteren Kryospeichervorrichtungen wird vermieden.

In Fig. 10 ist die Entnahme einer Teilprobe aus der Probenaufnahmeeinrichtung 200 illustriert. Die Entnahme einer Teilprobe erfolgt vorzugsweise im tiefgekühlten Zustand, so dass die übrige Probe im kryokonservierten Zustand verbleibt. Mit einer Trennvorrichtung wird ein Längenstück der Probenkammer 301 abgetrennt. Da die Suspensionsdichte der Suspensionsprobe vorab bekannt ist, kann die Ermittlung des Längenstücks je nach der Zahl der gewünschten suspendierten Partikel gewählt werden, die in der entnommenen Teilprobe enthalten sein sollen. Es werden ggf. mehrere Bahnen der Probenkammer 301 zwischen der Datenspeichereinrichtung 200 und dem Stabilisierungselement 540 entnommen.

In Fig. 11 ist die sequentielle Beschickung der Probenkammern einer schematisch illustrierten Kyrospeichervorrichtung 100 aus einer Vielzahl von Kompartimenten 810, 820, ... illustriert. Jede Probenkammer, deren Position an der Kyrospeichervorrichtung 100 ggf. mit einer Nummer identifiziert ist, wird mit der Flüssigkeitspipette 810 verbunden, um jeweils eine Flüssigkeitsprobe aufzusaugen.

Die Entnahme von Proben von der erfindungsgemäßen Kryospeichervorrichtung erfolgt anwendungsabhängig entsprechend einem der folgenden Prinzipien. Erstens ist es möglich, die gesamte Kryospeichervorrichtung aufzutauen und den Inhalt der mindestens einen Probenkammer zu entnehmen. Dies erfolgt beispielsweise durch Anlagen eines Unterdruckes an eines der Enden der mindestens einen Probenkammer. Alternativ ist es möglich, Proben oder Teilproben im tiefgekühlten Zustand zu entnehmen, indem einzelne Probenkammern oder Teile von Probenkammern mit einer Trennvorrichtung mechanisch von der übrigen Kryospeichervorrichtung abgetrennt (z. B. abgeschnitten) werden.

In Fig. 12 sind verschiedene Möglichkeiten illustriert, die Ein-und/oder Auslassenden von Probenkammern 301 erfindungsgemäßer Kryospeichervorrichtungen zu verschließen. Ein besonderer Vorteil der erfindungsgemäß verwendeten, rohrförmigen Probenkammern besteht darin, dass die Querschnittsdimensionen der Ein- oder Auslassöffnungen sehr viel kleiner als die Längsdimensionen der Probenkammern ist. Damit wird der Flächenbereich, in dem die zu konservierende Probe mit der Umgebung (insbesondere mit Mikroorganismen) in Kontakt treten kann, und damit das Kontaminationsrisiko minimiert. Da eine Kontamination im Tieftemperaturzustand durch Stofftransport weitestgehend ausgeschlossen ist, dient der Verschluss der Enden insbesondere einer Abgrenzung der Probe nach der Beschickung der Probenaufnahmeeinrichtung oder nach dem Auftauen. Gemäß den Teilbildern (a) und (b) wird ein Pfropf 325 oder ein Deckel 326 zum Verschließen der Probenkammer 301 verwendet, die eine Versiegelung bilden. Die Verschlusseinrichtung besteht hier beispielsweise aus Wachs oder einem anderen Kunststoffmaterial. Alternativ kann sich gemäß den Teilbildern (c) und (d) auch ein Verschluss aus der Handhabung der Probenkammer .301 bei der Entnahme von Teilproben ergeben. Beispielsweise kann bei schlauchförmigen Probenkammern eine Klemmstelle 327 gebildet werden, an der die gegenüberliegenden Innenwände der Probenkammer 301 nach einem Klemmen und Abschneiden einer Teilprobe adhärent zusammenhaften. Es kann auch eine gesonderte Klemmeinrichtung vorgesehen sein. Falls die Suspensionsprobe unter der Wirkung von Kapillarkräften in der Probenkammer 301 gehalten wird, so bildet die Probe selbst einen Flüssigkeitsverschluss 328, der allerdings der Kontamination durch die Umgebung ausgesetzt ist.

Die in der vorstehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausgestaltungen von Bedeutung sein.

## Patentansprüche

1. Kryospeichervorrichtung (100), die mindestens eine Datenspeichereinrichtung (200) und mindestens eine Probenaufnahmeeinrichtung (300) mit mindestens einer Probenkammer (301, 302, ...) zur Aufnahme einer Suspensionsprobe aufweist, wobei die mindestens eine Probenkammer (301, 302, ...) mit der Datenspeichereinrichtung (200) verbunden ist und eine langgestreckte, hohle Form besitzt, die sich von jeweils einem Einlassende (320) über eine vorbestimmte Länge bis zu einem Auslassende (330) erstreckt,
**dadurch gekennzeichnet, dass**
die mindestens eine Probenkammer (301, 302, ...) flexibel und beweglich hängend an der mindestens einen Datenspeichereinrichtung (200) befestigt ist.

2. Kryospeichervorrichtung nach Anspruch 1, bei der die mindestens eine Probenkammer (301, 302, ...) die Form eines Hohlzylinders, Hohlkonus, Rohres, Schlauches, oder einer Hohlnadel besitzt.

3. Kryospeichervorrichtung nach einem der vorhergehenden Ansprüche, bei der die mindestens eine Probenkammer (301, 302, ...) aus einem flexiblen, biegsamen Material besteht.

4. Kryospeichervorrichtung nach einem der vorhergehenden Ansprüche, bei der die mindestens eine Probenkammer (301, 302, ...) mit mindestens einem Sensor, insbesondere einem Temperatursensor, und/oder Kühlflächen ausgestattet ist.

5. Kryospeichervorrichtung nach einem der vorhergehenden Ansprüche, bei der die Datenspeichereinrichtung (200) mindestens einen Datenspeicher (210) mit einem Gehäuse (310) umfasst, mit dem die Probenaufnahmeeinrichtung (300) verbunden ist.

6. Kryospeichervorrichtung nach Anspruch 5, bei der die Datenspeichereinrichtung (200) eine Vielzahl von Datenspeichern (210, 220, 230, 240) umfasst, die entlang der Länge der mindestens einen Probenkammer (301, 302, ...) befestigt sind.

7. Kryospeichervorrichtung nach einem der vorhergehenden Ansprüche, bei der die Querschnittsdimension der mindestens einen Probenkammer (301) entlang von deren Länge variiert, so dass mindestens eine Teilkammer (350) mit einer Querschnittsdimension gebildet wird, die größer als die Querschnittsdimensionen der Ein- und Auslassöffnungen (320, 330) ist.

8. Kryospeichervorrichtung nach einem der vorhergehenden Ansprüche, bei der die Probenaufnahmeeinrichtung (300) mehrere Probenkammern (301, 302, ...) aufweist, die an ihren Außenwänden miteinander verbunden sind, so dass ein integraler, flexibler Probenkammerblock (340) gebildet wird.

9. Kryospeichervorrichtung nach einem der vorhergehenden Ansprüche, bei der eine Markierungseinrichtung (600) vorgesehen ist, die eine Markierungsschicht (610) auf der Datenspeichereinrichtung (200) und/oder Markierungselemente (620) umfasst, die an der Probenaufnahmeeinrichtung (300) angebracht sind.

10. Kryospeichervorrichtung nach einem der vorhergehenden Ansprüche, bei der eine Befestigungseinrichtung (550) vorgesehen ist, mit der die mindestens eine Probenkammer (301, 302, ...) an der Datenspeichereinrichtung (200) befestigt ist.

11. Kryospeichervorrichtung nach Anspruch 12, bei der die Befestigungseinrichtung (550) einzeln oder als Bündel angeordnete Streifen umfasst, an deren einen Ende jeweils eine Probenkammer und deren anderes Ende an der Datenspeichereinrichtung (200) befestigt ist.

12. Verfahren zur Speicherung mindestens einer Suspensionsprobe in einem Tieftemperaturzustand, mit den Schritten:
- Aufnahme der mindestens einen Suspensionsprobe in mindestens eine Probenkammer (301, 302, ...) einer Kryospeichervorrichtung (100) nach einem der vorhergehenden Ansprüche, und
- Überführung der Suspensionsprobe in einen Tieftemperaturzustand durch Positionieren mindestens eines Teils der Kryospeichervorrichtung in einem Kryomedium.

13. Verfahren nach Anspruch 12, bei dem die Aufnahme der mindestens einen Suspensionsprobe in die mindestens eine Probenkammer durch Eintauchen der mindestens einen Probenkammer (301, 302,...) mit jeweils einem Einlassende (320) in ein Probenreservoir (700) und Überführung der Suspensionsprobe unter der Wirkung eines an dem entsprechenden Auslassende (330) ausgeübten Unterdruckes oder von Kapillarkräften erfolgt.

14. Verfahren nach Anspruch 12 oder 13, bei dem in der Datenspeichereinrichtung (200) Daten gespeichert werden, die die Identifizierung der mindestens einen Suspensionsprobe, Messdaten, die an der Suspensionsprobe gewonnen wurden, Referenzdaten von Referenzproben und/oder Verlaufsdaten über Eigenschaften der Suspensionsprobe im Verlauf der Speicherung im Tieftemperaturzustand umfassen.

15. Verfahren nach einem der Ansprüche 12 bis 14, bei dem von der mindestens einen Probenkammer (301, 302, ...) im Tieftemperaturzustand mindestens eine Teilprobe durch mechanische Abtrennung abgelöst wird.

16. Verfahren nach Anspruch 15, bei dem bei der mechanischen Abtrennung eine lokale Erwärmung der jeweiligen Probenkammer in der Umgebung der abzutrennenden Teilprobe oder eine Abtrennung an der Befestigungseinrichtung (500) erfolgt.

17. Verfahren nach einem der Ansprüche 12 bis 15, bei dem Einlass- und/oder Auslassenden (320, 330) der mindestens einen Probenkammer (301, 302, ...) durch Klemmen, Verpfropfen, Versiegeln oder einen Teil der Suspensionsprobe verschlossen werden.

## Claims

1. Cryo-storage device (100), having at least one data storage device (200) and at least one sample device (300) with at least one sample chamber (301, 302 ...) to accommodate a suspension sample, whereby the at least one sample chamber (301, 302 ...) is connected to the data storage device (200) and has an elongated, hollow shape extending from one inlet end (320) over a predetermined length to an outlet end, **characterised in that** the at least one sample chamber (301, 302 ...) is secured by being suspended in a flexible and a movable manner to the at least one data storage device (200).

2. Cryo-storage device in accordance with Claim 1, in which the at least one sample chamber (301, 302 ...) is in the shape of a hollow cylinder, a hollow cone, a tube, a hose or a hollow needle.

3. Cryo-storage device in accordance with either of the above Claims, in which the at least one sample chamber (301, 302 ...) comprises a flexible, bendable material.

4. Cryo-storage device in accordance with any of the above claims, in which the at least one sample chamber (301, 302 ...) comprises at least one sensor, in particular a temperature sensor, and/or cooling surfaces.

5. Cryo-storage device in accordance with any of the above claims, in which the data storage device (200) comprises at least one data storage (210) with a housing (310), to which the sample device (300) is connected.

6. Cryo-storage device in accordance with Claim 5 above, in which the data storage device (200) comprises a number of data storages (210, 220, 230, 240), which are attached along the length of the at least one sample chamber (301, 302 ...).

7. Cryo-storage device in accordance with any one of the above claims, in which the cross-sectional dimension of the at least one sample chamber (301) varies along its length, so that at least one partial chamber (350) is formed, having a cross-sectional dimension that is greater than the cross-sectional dimensions of the inlet and outlet orifices (320, 330).

8. Cryo-storage device in accordance with any of the above claims, in which the sample device (300) has a number of sample chambers (301, 302 ...), which are joined at their outer walls, so that an integral and flexible sample chamber block (340) is formed.

9. Cryo-storage device in accordance with any of the above claims, in which a marking device (600) is provided, incorporating a marking layer (610) on the data storage device (200) and/or marking elements (620), which are attached to the sample device (300).

10. Cryo-storage device in accordance with any of the above claims, in which an attachment device (550) is provided, with which the at least one sample chamber (302, 302 ...) is attached to the data storage device (200).

11. Cryo-storage device in accordance with Claim 12, in which the said attachment device (550) comprises strips, arranged either individually or in bundles, to the one end of which is attached in each case a sample chamber, while other end is attached to the data storage device (200).

12. Process for the storage of at least one suspension product at a low temperature state in the following steps:
- placing at least one suspension sample into at least one sample chamber (301, 302 ...) of a cryo-storage device (100) in accordance with one of the preceding claims, and,
- bringing the suspension sample to a low temperature state, by placing at least one part of the cryo-storage device in a cryo-medium.

13. Process in accordance with Claim 12 above, in which the at least one suspension sample is placed in the at least one sample chamber by immersing the at least one sample chamber (301, 302 ...) with in each case an inlet end (320), in a sample reservoir (700), and the suspension sample is subjected to the influence of an under-pressure applied to the corresponding outlet end (330) or to the effect of capillary forces.

14. Process in accordance with either Claim 12 or 13, in which are stored in the data storage device (200), data incorporating the identification of the at least one suspension sample, measuring results obtained from the suspension sample, reference data from reference samples and/or continuous data relating to the properties of the suspension sample during the low temperature storage.

15. Process in accordance with one of the Claims 12 to 14, in which at least one part sample taken from the at least one sample chamber (301, 302 ...) is detached while in a low temperature state by means of mechanical separation.

16. Process in accordance with Claim 15, in which, during the mechanical separation, local heating of the respective sample chamber takes place in the vicinity of the part sample that is to be detached, or separation takes place at the attachment device (500).

17. Process in accordance with any of the Claims 12 to 15, in which inlet and/or outlet ends (320, 330) of the at least one sample chamber (301, 302 ...) are closed off by means of clamps, stoppers, seals or by a part of the suspension sample.

## Revendications

1. Dispositif de stockage cryogénique (100), qui comprend au moins un système de stockage de données (200) et au moins un système de réception d'échantillon (300) doté d'au moins une chambre d'échantillon (301, 302, ...) destinée à réceptionner un échantillon en suspension, la au moins une chambre d'échantillon (301, 302, ...) étant reliée au système de stockage de données (200) et possédant une forme creuse et allongée, qui s'étend de respectivement une extrémité d'entrée (320) sur une longueur prédéfinie à une extrémité de sortie (330),
**caractérisé en ce que**
la au moins une chambre d'échantillon (301, 302,...) est fixée de façon flexible et mobile en suspension à le au moins un système de stockage de données (200).

2. Dispositif de stockage cryogénique selon la revendication 1, dans lequel la au moins une chambre d'échantillon (301, 302, ...) possède la forme d'un cylindre creux, d'un cône creux, d'un tube, d'un tuyau, ou d'une aiguille creuse.

3. Dispositif de stockage cryogénique selon l'une quelconque des revendications précédentes, dans lequel la au moins une chambre d'échantillon (301, 302, ...) est constituée d'un matériau flexible et souple.

4. Dispositif de stockage cryogène selon l'une quelconque des revendications précédentes, dans lequel la au moins une chambre d'échantillon (301, 302, ...) est équipée d'au moins un capteur, notamment d'un capteur de température, et/ou de surfaces de refroidissement.

5. Dispositif de stockage cryogénique selon l'une quelconque des revendications précédentes, dans lequel le système de stockage de données (200) comporte au moins une mémoire (213) dotée d'un boîtier (310), auquel est relié le système de réception d'échantillon (300).

6. Dispositif de stockage cryogénique selon la revendication 5, dans lequel le système de stockage de données (200) comporte une pluralité de mémoires (210, 220, 230, 240) qui sont fixées le long de la longueur de la au moins une chambre d'échantillon (301, 302, ...).

7. Dispositif de stockage cryogénique selon l'une quelconque des revendications précédentes, dans lequel la dimension en section transversale de la au moins une chambre d'échantillon (301) varie le long de sa longueur, de sorte qu'au moins une chambre partielle (350) est formée avec une dimension en section transversale qui est supérieure à la dimension en section transversale des orifices d'entrée et de sortie (320, 330).

8. Dispositif de stockage cryogénique selon l'une quelconque des revendications précédentes, dans lequel le système de réception d'échantillon (300) comprend plusieurs chambres d'échantillon (301, 302, ...), qui sont reliées les unes aux autres au niveau de leurs parois extérieures, de sorte que cela forme un bloc de chambres d'échantillon (340) intégral et flexible.

9. Dispositif de stockage cryogénique selon l'une quelconque des revendications précédentes, dans lequel est prévu un système de marquage (600) qui comporte une couche de marquage (610) sur le système de stockage de données (200) et/ou des éléments de marquage (620) qui sont aménagés sur le système de réception d'échantillon (300).

10. Dispositif de stockage cryogénique selon l'une quelconque des revendications précédentes, dans lequel est prévu un système de fixation (550) avec lequel la au moins une chambre d'échantillon (301, 302, ...) est fixée au système de stockage de données (200).

11. Dispositif de stockage cryogénique selon la revendication 12, dans lequel le système de fixation (550) comporte des bandes disposées individuellement ou en paquet, sur une extrémité desquelles est fixée respectivement une chambre d'échantillon et dont l'autre extrémité est fixée au système de stockage de données (200).

12. Procédé de stockage d'au moins un échantillon en suspension à basse température, comprenant les étapes :
- de réception du au moins un échantillon en suspension dans au moins une chambre d'échantillon (301, 302, ...) d'un dispositif de stockage à basse température (100) selon l'une quelconque des revendications précédentes, et
- de transfert de l'échantillon en suspension à basse température en positionnant au moins une partie du dispositif de stockage cryogénique dans un milieu cryogénique.

13. Procédé selon la revendication 12, dans lequel la réception du au moins un échantillon en suspension dans la au moins une chambre d'échantillon s'effectue en immergeant la au moins une chambre d'échantillon (301, 302, ...) dotée respectivement d'une extrémité d'entrée (320) dans un réservoir d'échantillon (700) et en transférant l'échantillon en suspension sous l'action d'une dépression exercée sur l'extrémité de sortie (330) correspondante ou de forces capillaires.

14. Procédé selon la revendication 12 ou 13, dans lequel les données sont mémorisées dans le système de stockage de données (200), lesquelles données comportent l'identification du au moins un échantillon en suspension, les données de mesure, qui ont été obtenues sur l'échantillon en suspension, les données de référence des échantillons de référence et/ou les données de déroulement concernant les propriétés de l'échantillon en suspension pendant le déroulement à basse température.

15. Procédé selon l'une quelconque des revendications 12 à 14, dans lequel au moins un échantillon divisé est détaché de la au moins une chambre d'échantillon (301, 302, ...) à basse température par séparation mécanique.

16. Procédé selon la revendication 15, dans lequel, à l'occasion de la séparation mécanique, il s'effectue un réchauffement local de la chambre d'échantillon respective au voisinage de l'échantillon divisé à séparer ou une séparation sur le système de fixation (500).

17. Procédé selon l'une quelconque des revendications 12 à 15, dans lequel les extrémités d'entrée et/ou de sortie (320, 330) de la au moins une chambre d'échantillon (301, 302, ...) sont fermées par serrage, pose de bouchon, scellage ou une partie de l'échantillon en suspension.
